Europäisches Patentamt

European Patent Office

Office européen des brevets

(19)

(11) Publication number: **0 209 362**
A2

(12) **EUROPEAN PATENT APPLICATION**

(21) Application number: 86305446.6

(22) Date of filing: 15.07.86

(51) Int. Cl.⁴: **B 32 B 27/10,** B 65 D 65/40

(30) Priority: 15.07.85 GB 8517776

(43) Date of publication of application: 21.01.87
Bulletin 87/4

(84) Designated Contracting States: BE CH DE FR GB IT LI
NL SE

(71) Applicant: CAMVAC HOLDINGS LIMITED, Burrell Way,
Thetford Norfolk IP24 3QY (GB)

(72) Inventor: Kelly, Roger Sidney Arthur, Mothersoles Low
Street Bardwell, Bury St. Edmunds Suffolk (GB)

(74) Representative: Wain, Christopher Paul et al, A.A.
THORNTON & CO. Northumberland House 303-306 High
Holborn, London WC1V 7LE (GB)

(54) Laminates of metallised film and paper or board.

㊿ Laminates of paper or board which are especially suited for
use as decorative or protective wrapping or packaging, labels
or cartons, are made by laminating to the paper or board a
mono- or multi-layer coextruded film of thickness 6 to 12
microns and comprised of biaxially oriented polypropylene
each surface of which is either glossy or matt and is metallised
with aluminium to a thickness of 100 to 500Å.

EP 0 209 362 A2

- 1 -

# LAMINATES OF METALLISED FILM
## AND PAPER OR BOARD

This invention relates to laminates of metallised film and paper or board.

Laminates of paper or board with aluminium foil are known which can be printed and which have a number of uses including decorative and protective wrappings for fats, foodstuffs, soap and other commodities, labels for bottles, jars and cans, and cosmetics etc. Since aluminium foil as normally produced has one bright and one matt surface, either of these surfaces can be laminated to give a product with either a matt or a gloss finish.

It is also known to use laminates of paper or board with aluminium metallised polyester film for similar applications, and such laminates have some technical advantages over aluminium foil laminates. For example, the relatively high stiffness of aluminium foil/paper laminates can restrict running speeds on certain packaging machines and the flexible metallised polyester film laminates allow higher outputs. The higher stiffness of foil/paper laminate labels can also restrict running speeds on labelling machines and make these labels difficult to apply to bottles with tight radii or unusual shapes. In cartons, particularly those made from thick board, foil/board laminates can crack when the laminate is creased or folded because aluminium foil has relatively low elasticity and resistance to flex-cracking. This problem too is largely overcome by the use of metallised polyester/ board laminates. Metallised polyester film laminates also have a brighter appearance than aluminium foil laminates.

Whilst such metallised polyester film laminates to paper and board are widely used, they have certain drawbacks. For example, they do not provide the matt appearance which is sometimes required for aesthetic reasons, and they are generally expensive in comparison with most laminates of aluminium foil to paper and board, except those containing relatively thick gauges of foil. Thus, despite their technical benefits, their usage for many end uses is constrained by their cost.

We have now found a new laminate which shows some advantages over the above structure.

According to the present invention, there is provided a monolayer or multilayer co-extruded film of thickness 6-12 microns, and preferably 8 microns, comprised of biaxially oriented polypropylene (hereinafter abbreviated to "OPP"), optionally with surface layers of other polyolefin polymers or co-polymers, having any combination of glossy and matt surfaces but preferably one glossy and one matt surface, metallised on each surface with aluminium to a thickness of between 100 and 500 $\overset{o}{A}$ on each surface, and laminated on one surface to paper or board by any suitable lamination technique including for example, adhesive or extrusion lamination (the former being preferred), the other metallised surface being optionally coated, lacquered, printed or decorated.

The invention also includes such a laminate in the form of a decorative or protective wrapping or packaging (eg gift wrap, soap wrap, packaging for fatty foodstuffs such as butter or margarine etc, decorative or protective bag etc), a label (eg for a bottle, can or jar), or a carton (eg for a bottle of whisky, spirits etc, or for other items such as cigarettes, confectionery, cosmetics, foodstuffs etc).

The metallised OPP laminates of the present invention have a number of advantageous features as compared to conventional aluminium foil and/or metallised polyester laminates, including:

1. Appearance. The bright metallised surface achieved with laminates of metallised OPP film of the invention can be more reflective and less hazy than that obtained with bright aluminium foil laminates and hence more aesthetically desirable for those applications requiring a bright appearance. With currently available metallised polyester film laminates, it is difficult to achieve a matt finish similar to matt aluminium foil laminates, whereas using metallised OPP in accordance with the present invention, a matt finish very similar to matt aluminium foil, but more consistent, is obtainable. It is important commercially to provide a foil-like matt appearance in some of the applications for the laminates of the invention, especially for aesthetic purposes.

2. Cost. The density of metallised OPP film is about 0.92 compared with a density of metallised polyester film of about 1.4. Polypropylene resin is also inherently lower in cost than polyester resin. The gauge of metallised polyester film normally preferred for lamination to paper and board is 12 microns, this being the most economic substance weight on an area cost basis, and having an area yield of about 59 metre$^2$/kg. The area yield of 8 micron metallised OPP film is about 136 metre$^2$/kg and its area cost is significantly lower than that of metallised polyester film. Consequently, the cost of laminates to paper and board is also lower and generally in line with the cost of the more economic laminates of aluminium foil to paper and board (ie those based on 8-9 micron foil).

3. Runnability on packaging machinery. Laminates of

- 4 -

aluminium foil to paper can only be run relatively slowly on some automatic wrapping and packaging machines, particularly those of the flow wrap type and those which shape the material over a tightly radiused forming shoulder, because the stiffness of the laminate tends to cause creasing and possibly rupture of the foil. Laminates of metallised OPP to paper frequently run faster under such circumstances because of their greater flexibility.

4. Improved flexibility. Foil/paper labels are difficult to apply on some high speed automatic labelling machines, particularly on containers with tightly radiused surfaces or tight corners. The relatively stiff labels tend to lift at the edges before the adhesive used forms sufficient tack to hold them firmly to the container. This is referred to as "flagging". The more flexible metallised OPP/paper laminate labels show less flagging under such circumstances.

5. Flex crack resistance. When creased and folded into a carton, the foil in a foil/board laminate has a tendency to crack at the fold (particularly on cartons containing a heavy gauge or E-flute board). Metallised OPP will stretch without cracking on folds.

6. Barrier retention on flexing. Laminates of both aluminium foil and metallised OPP to paper or board provide a good barrier to moisture which is important on wrappings or cartons for products which are prone to pick up or lose moisture eg tobacco, fats, dehydrated foodstuffs. However, the barrier properties of foil laminates can be lost if the foil is ruptured as a result of flexing or creasing of the laminate when running on some packaging machines, (particularly those which fold the material over a forming shoulder) or folding of the carton. Metallised OPP laminates are less prone to such damage and tend to retain their moisture barrier better when so abused.

In the laminates of the invention, the film is metallised on both sides. This has several technical, economic and aesthetic advantages. With one side metallised film, either the metallised surface must be laminated to the paper or board, which means the appearance of the laminate tends to be dulled because of the haze of the film, or the film surface must be laminated, which increases the risk of damage to the exposed metal layer in subsequent processing operations such as lacquering or printing, any scratches showing up in contrast against the white background of the paper. If two-side metallised film is used, any scratches in one of the metal layers will be less obvious because they will be contrasted by the other metal layer rather than by the white paper. Also, with one side metallised film, if the unmetallised surface is laminated to the paper or board, the choice of adhesives is limited because this unmetallised film surface has relatively low surface energy and only adhesives based on solvents with relatively low wetting tension will wet and consequently adhere to it. In contrast, by using two side metallised film, the adhesive bonds to the high energy metal surface, which is wetted by the full range of solvents including water. Consequently, it is possible to select the adhesive used with less technical constraints and optimise for desired properties such as cost or eliminate the risk of odour from retained solvent or other technical properties desirable for the end use. Similarly, if one side metallised film is laminated with the unmetallised surface outermost, the choice of inks and over-lacquers is restricted by the low surface energy, and this problem too may be overcome by the use of two-side metallised film.

As can be readily seen from the foregoing, the laminates of the invention provide a number of technical and aesthetic benefits over conventional laminates based on aluminium foil at an economic cost which cannot be achieved with other currently available metallised polyester film laminates.

In the laminates of the invention, surface layers of other polyolefin polymers or copolymers can be provided (by coextrusion with the OPP) on the OPP film surfaces. An example of such a polymer is polyethylene. These surface layers can improve adhesion of the aluminium and also provide a desired matt or gloss finish. The preferred thickness for the aluminium layers is from 350 to 500Å. The surfaces of the metallised OPP film will appear glossy or matt depending on the surface finish before metallisation.

In order that the invention may be more fully understood, the following Examples are given by way of illustration only.

Example 1

An 8 micron biaxially oriented coextruded polypropylene film with one matt and one glossy surface (commercially available as Torayfan YL 10 from Toray Films) was metallised on both sides (in one pass) with aluminium to an optical density of 2.9, equivalent to a metal thickness of approximately 470Å (approximately 220-250Å on each side). On a conventional coater/laminator, the bright surface was coated with a commercially available solvent-based modified nitrocellulose lacquer (suitable as a print primer for lithographic inks), dried to give a dry coat weight of 1.3 gsm, and the matt surface was coated with a commercially available two-part high performance solvent-based polyurethane adhesive, and dried to give a dry coat weight of 2.6 gsm. The adhesive-coated surface was dry bond laminated to an 80 gsm commercially available machine glazed kraft paper. After storing for 2-3 days to allow the adhesive to cure, the laminate was slit and sheeted. The sheets were litho printed and die cut into labels. The labels were applied to a bottle of basically square profile with tightly radiused corners using a conventional label applicator machine and water-based adhesive. The machine could be run at high speed without creasing or flagging. A control experiment using a conventional 8 micron aluminium foil/80 gsm paper label gave flagging unless the machine was run at low speed.

Example 2

A two-side metallised film as in Example 1 was coated on the bright surface with a commercially available solvent-based modified nitrocellulose lacquer (suitable as a print primer for flexographic inks), and dried to give a dry coat weight of 1.2 gsm. The matt surface was wet-laminated to a 50 gsm commercially available machine glazed kraft paper using a commercially available water-based adhesive. The laminate was flexo printed with a giftwrap design. The resultant giftwrap had a brighter and more consistent appearance than either conventional 8 micron aluminium foil/50 gsm paper laminate or 50 gsm coated and metallised paper, gave a more rounded and hence more aesthetically attractive pack with less hard creases than conventional foil/paper laminate, and was less prone to development of creases and folds on handling than foil/paper laminate.

Example 3

A two-side metallised film as in Example 1 was coated on the matt surface with a commercially available gold coloured solvent-based modified nitrocellulose lacquer and dried to give a dry coat weight of 1.4 gsm. The bright surface was dry bond laminated as in Example 1 to a 230 gsm commercially available clay coated carton board. After curing, the laminate was slit and sheeted, litho printed and die cut onto blanks for cigarette cartons. These blanks were run on a Molins HLP 1 cigarette carton machine. The

0209362

- 8 -

resultant packs were similar in appearance to conventional 8 micron foil/230 gsm board cartons but of lower cost.

Example 4

A two-side metallised film as in Example 1 was wet laminated on the matt side to a 600 gsm clay coated carton board using a conventional commercially available water-based adhesive and coated on the bright surface with a commercially available solvent based modified nitrocellulose lacquer (suitable as a print primer for lithographic inks). The laminate was sheeted, litho printed and die cut into blanks for spirit cartons. These cartons had a brighter, more consistent finish than cartons produced using conventional 8 micron foil/600 gsm board, and the flaps showed less tendency to crack when folded or flexed. The laminate was of lower cost than laminates of 2 side metallised 12 micron polyester film also used for the application.

CLAIMS:

1. A laminate which comprises a monolayer or multilayer co-extruded film of thickness 6 to 12 microns, comprised of biaxially oriented polypropylene each surface being either glossy or matt and metallised with aluminium to a thickness of from 100 to 500Å on each surface, said film being laminated on one surface to paper or board.

2. A laminate according to claim 1, wherein the surface of the film which is not laminated to the paper or board is coated, lacquered, printed or decorated.

3. A laminate according to claim 1 or 2, wherein one surface of the film is glossy and the other surface is matt.

4. A laminate according to claim 1,2 or 3, wherein the film comprises one or more surface layers of other polyolefin polymers or copolymers.

5. A laminate according to any of claims 1 to 4, wherein one or both surfaces of the film are metallised with aluminium to a thickness of from 350 to 500Å.

6. A laminate according to any preceding claim wherein the film thickness is substantially 8 microns.

7. A laminate according to any preceding claim in the form of a decorative or protective wrapping or packaging, a label or a carton.